# EUROPÄISCHE PATENTANMELDUNG

(11) **EP 4 516 585 A1**
(43) Veröffentlichungstag der Anmeldung: **05.03.2025**
(21) Anmeldenummer: 24195272.0
(22) Anmeldetag: 20.08.2024
(51) Int. Cl.: B60P 3/34, B60P 3/36

(54) **FREIZEITFAHRZEUG, MODULARE ANORDNUNG UND MODULARES BAUKASTENSYSTEM**

(30) Priorität: 25.08.2023 DE 102023122931
(71) Anmelder: Bürstner GmbH & CO. KG, 77694 Kehl (DE)
(72) Erfinder: Kasteleiner, Alexander, 86926 Greifenberg (DE); Kromer, Jens, 77855 Achern (DE); Sackers, Olaf, 72172 Sulz (DE)
(74) Vertreter: Müller Schupfner & Partner Patent- und Rechtsanwaltspartnerschaft mbB (Muc)

(57) **Zusammenfassung**

Modulare Anordnung (11) für ein Freizeitfahrzeug (1), insbesondere ein Wohnmobil und/oder einen Campervan und/oder ein auf einem Hochdachkombi basierendes Freizeitfahrzeug, mit zumindest einem Küchenmodul (30). Vorgeschlagen wird, dass eine Ablageeinrichtung (2) vorgesehen ist, dass das Küchenmodul (30) mittels zumindest einer Auszugsschiene (31) mit der Ablageeinrichtung (2) verbunden ist und dass das Küchenmodul (30) zumindest im Wesentlichen aus der Ablageeinrichtung (2) herausziehbar ist. Ferner sind ein Freizeitfahrzeug (1) und ein modulares Baukastensystem (25) angegeben.

## Beschreibung

Die Erfindung betrifft ein Freizeitfahrzeug, insbesondere ein Wohnmobil und/oder einen Campervan. Speziell betrifft die Erfindung ein auf einem Hochdachkombi basierendes Freizeitfahrzeug.

Aus der DE 10 2021 114 915 A1 ist ein Freizeitfahrzeug mit einer an oder in einer Seitenwand angeordneten Doppeltür bekannt. Durch ein auf unterschiedlichen Höhen anordenbares Möbelelement kann ein Nutzer das Möbelelement bei geschlossenem Türflügel im Inneren des Freizeitfahrzeugs und bei geöffnetem Türflügel außerhalb des Freizeitfahrzeugs nutzen. Das Möbelelement kann ein Küchenmodul sein.

Aus der DE 10 2016 200 198 A1 ist eine Anordnung zum Verstauen eines Küchenmoduls in einem Fahrzeug bekannt. Hierbei weist das Fahrzeug eine Fahrzeugwand mit einer Karosserieaußenverkleidung und einer Karosserieinnenverkleidung auf. Das Küchenmodul ist in einer Ruhestellung in einem zwischen der Karosserieaußenverkleidung und der Karosserieinnenverkleidung ausgebildeten Freiraum der Fahrzeugwand angeordnet sowie durch in Karosserieinnenverkleidung ausgebildete Öffnung hindurch in eine Funktionsstellung innerhalb des Fahrzeuginnenraums und zurück überführbar.

Die aus der DE 10 2016 200 198 A1 bekannte Anordnung hat den Nachteil, dass der Platz in der Fahrzeugwand sehr begrenzt ist. Das Küchenmodul muss daher sehr klein und insbesondere sehr flach ausgeführt sein. Außerdem ist eine Anpassung an das spezielle Fahrzeug erforderlich, so dass keine modulare Ausgestaltung im Sinne einer beliebigen Anwendung bei verschiedenen Fahrzeugtypen oder Fahrzeugmodellen möglich ist. Ein Einsatz bei einem anderen Fahrzeugtyp oder Fahrzeugmodell erfordert vielmehr eine umfassende Neukonstruktion.

Aus der DE 10 2021 114 479 A1 ist eine mobile Kücheneinheit mit einer mobilen Waschvorrichtung für ein Freizeitfahrzeug bekannt. Die mobile Waschvorrichtung kann ein Waschbecken aufweisen. Ferner sind ein nach oben offenes Behältnis und ein Hybridtank, welcher einen Frischwassertank und einen Abwassertank aufweist, und welcher in einem Raum mit einem vorgegebenen Volumen angeordnet ist, vorgesehen. Sowohl der Frischwassertank als auch der Abwassertank haben ein variables Volumen. Das Behältnis ist faltbar. Hierdurch wird erreicht, dass die Waschvorrichtung platzsparend verstaut oder transportiert werden kann. Die mobile Kücheneinheit funktioniert auch dann, wenn sie keine Verbindung zum Energie- oder Wassersystem des Freizeitfahrzeugs aufweist.

Wenn der Innenraum des Freizeitfahrzeugs besonders begrenzt ist, dann sind Einrichtungen, wie ein Küchenmodul, nicht oder nur in geringem Umfang realisierbar, wenn zugleich Stauraum für sperrige Güter benötigt wird. Ferner ergeben sich dann Einschränkungen bei der Benutzung, so dass das Küchenmodul gegebenenfalls erst aus dem Freizeitfahrzeug ausgeladen werden muss, bevor es dann außerhalb und unabhängig von dem Freizeitfahrzeug benutzt werden kann.

Aufgabe der Erfindung ist es, eine modulare Anordnung mit einem Küchenmodul für ein Freizeitfahrzeug, ein Freizeitfahrzeug und ein modulares Baukastensystem anzugeben, die verbessert ausgestaltet sind. Insbesondere ist es eine Aufgabe der Erfindung eine Küchenmodul für ein Freizeitfahrzeug und ein Freizeitfahrzeug anzugeben, bei denen bei einem besonders begrenzten Innenraum des Freizeitfahrzeugs eine verbesserte Nutzung eines Küchenmoduls möglich ist und zugleich ein Stauraum für den Transport weiterer und gegebenenfalls auch sperriger Güter ermöglicht wird.

Die Aufgabe wird durch eine modulare Anordnung mit den Merkmalen des unabhängigen Patentanspruchs 1, durch ein Freizeitfahrzeug mit den Merkmalen des Patentanspruchs 17 und ein modulares Baukastensystem mit den Merkmalen des Anspruchs 20 gelöst. Vorteilhafte Weiterbildung der Erfindung sind in den Unteransprüchen angegeben.

Die Aufgabe wird durch eine modulare Anordnung für ein Freizeitfahrzeug, insbesondere ein Wohnmobil und/oder einen Campervan und/oder ein auf einem Hochdachkombi basierendes Freizeitfahrzeug, mit zumindest einem Küchenmodul gelöst, wobei eine Ablageeinrichtung vorgesehen ist, wobei das Küchenmodul mittels zumindest einer Auszugsschiene mit der Ablageeinrichtung verbunden ist und wobei das Küchenmodul zumindest im Wesentlichen aus der Ablageeinrichtung herausziehbar ist.

Ferner wird die Aufgabe durch ein Freizeitfahrzeug, insbesondere ein Wohnmobil und/oder einen Campervan und/oder ein auf einem Hochdachkombi basierendes Freizeitfahrzeug, mit zumindest einer solchen modularen Anordnung gelöst.

Außerdem wird die Aufgabe durch ein modulares Baukastensystem zur Herstellung von modularen Anordnungen, die für Freizeitfahrzeuge, insbesondere Wohnmobile und/oder Campervans und/oder auf Hochdachkombis basierenden Freizeitfahrzeugen, dienen, gelöst, wobei wenigstens zwei unterschiedliche modulare Anordnungen für wenigstens zwei unterschiedliche Basisfahrzeuge, auf denen die Freizeitfahrzeuge basieren, herstellbar sind und wobei zumindest zwei Küchenmodule herstellbar sind, indem ein Küchenmodul mit einem Stauraummodul kombiniert wird und ein Küchenmodul ohne Stauraummodul zum Einsatz kommt.

Vorteilhaft ist es, dass das Küchenmodul einen Induktionskocher aufweist. Dadurch entsteht am Kochfeld nur eine geringe Restwärme. Somit kann das Küchenmodul im Unterschied zu beispielsweise einem Glaskochfeld oder einer Stahlherdplatte wieder in die Ablageeinrichtung eingeschoben werden, ohne dass ein Brandgefahr besteht. Ferner wird ein Kochen mit elektrischer Energie ermöglicht. Außerdem wird durch den Induktionskocher eine Platzeinsparung erzielt, da der Kochtopf nach dem Abschalten auf dem Kochfeld stehen bleiben kann, ohne dass erwärmte Speisen anbrennen.

Vorteilhaft ist es, dass das Küchenmodul einen Frischwassertank aufweist, dass ein Auffüllbecher vorgesehen ist, der bei ausgezogenem Küchenmodul an einem Zulauf für den Frischwassertank montierbar ist, und dass ein Wasserhahn vorgesehen ist, über den Frischwasser aus dem Frischwassertank förderbar ist. Beispielsweise kann eine elektrische Förderpumpe vorgesehen sein, die bei einer Betätigung des Wasserhahns aktiviert wird.

Vorteilhaft ist es, dass ein Wasserhahn vorgesehen ist, der so umklappbar ist, dass er zumindest näherungsweise parallel zu einer Oberseite des Küchenmoduls orientiert ist. Hierdurch kann der Wasserhahn im montierten Zustand unter die Ablagefläche geschoben werden.

Vorteilhaft ist es, dass das Küchenmodul eine Spüle aufweist, dass ein Abwasserauslass vorgesehen ist, an den bei ausgezogenem Küchenmodul ein Abwasserschlauch montierbar ist, und dass Abwasser aus der Spüle zumindest mittelbar zu dem Abwasserauslass führbar ist. Hierdurch kann ein vorteilhaftes Ablassen des Spülwassers ermöglicht werden. Hierbei kann ein Ventil vorgesehen sein, das beispielsweise dann öffnet, wenn der Abwasserschlauch an den Abwasserauslass angeschlossen wird.

Vorteilhaft ist es, dass das Küchenmodul an seiner Oberseite eine Öffnung aufweist, in die die Spüle einsetzbar ist, dass die Spüle entnehmbar und/oder zusammenfaltbar ist und dass anstelle der Spüle ein Schneidbrett in die Öffnung einsetzbar ist. Die faltbare Spüle kann somit kompakt untergebracht werden, um Platz für das Schneidbrett zu schaffen. Die Spüle kann hierbei auch nach unten gefaltet werden, so dass Flüssigkeit vom Schneidbrett von der zusammengefalteten Spüle aufgefangen wird.

Vorteilhaft ist es, dass das Küchenmodul an zumindest einer Seitenwand zumindest ein elastisches Band aufweist und/oder dass das Küchenmodul an zumindest einer Seitenwand zumindest einen Griff, insbesondere eine Griffmulde, aufweist, an der das Küchenmodul aus der Ablageeinrichtung ziehbar ist. Hierdurch wird die Bedienung vereinfacht.

Vorteilhaft ist es, dass das Küchenmodul an zumindest einer Seitenwand ein elastische Seitentür, insbesondere eine Filztür, aufweist. Dadurch kann eine biegbare Seitentür realisiert werden, die einen vorteilhaften Zugriff ermöglicht.

Vorteilhaft ist es, dass die Seitentür mittels zumindest eines Magnetverschlusses geschlossen gehalten ist. Dadurch wird die Handhabung vereinfacht, da insbesondere bei einer Filztür Toleranzen beim Schließen auftreten können.

Vorteilhaft ist es, dass die Ablageeinrichtung eine Ablagefläche aufweist, dass eine Arbeitsplatte vorgesehen ist, die unter der Ablagefläche anordenbar ist, und dass die Arbeitsplatte ausziehbar und vorzugsweise ausziehbar und abnehmbar ist. Dadurch kann auch wenn die Ablagefläche belegt ist, ein zusätzlicher Raum zum Zubereiten von Speisen, zum Abstellen von Geschirr oder für andere Zwecke geschaffen werden.

Vorteilhaft ist es, dass die Ablageeinrichtung eine Ablagefläche aufweist und dass die Ablagefläche hochklappbar ist, so dass eine Benutzung des Küchenmoduls ermöglicht ist, wenn das Küchenmodul in die Ablageeinrichtung eingeschoben ist. Hierdurch ist beispielsweise sitzend im Heckraum eine Benutzung des Küchenmoduls möglich. Dadurch können insbesondere heiße Getränke zubereitet oder Speisen aufgewärmt werden.

Vorteilhaft ist es, dass eine Energiequelle, insbesondere eine aufladbare Batterie, vorgesehen ist, die im montierten Zustand ortsfest an und/oder in der Ablageeinrichtung anordenbar ist, und dass ein flexibler Stromkanal vorgesehen ist, der das Küchenmodul mit der Energiequelle verbindet. Hierbei kann die Energiequelle als transportierbare Energiequelle ausgebildet sein. Dadurch kann ein Laden auch außerhalb des Freizeitfahrzeugs erfolgen.

Vorteilhaft ist es, dass ein Stauraummodul vorgesehen ist, das neben dem Küchenmodul angeordnet ist, und dass das Küchenmodul und das Stauraummodul zusammen zumindest im Wesentlichen aus der Ablageeinrichtung herausziehbar sind. Hierdurch ist eine modulare Erweiterung möglich. Insbesondere kann hierdurch bei größeren Fahrzeugabmessungen, insbesondere einer in Längsrichtung des Fahrzeugs betrachteten größeren Länge des Heckraums, eine zusätzliche Funktionalität geschaffen werden.

Vorteilhaft ist es, dass eine Energiequelle, insbesondere eine aufladbare Batterie, vorgesehen ist, und dass die Energiequelle in dem Stauraummodul angeordnet ist. Hierdurch kann die Energiequelle durch das Stauraummodul geschützt untergebracht werden. Es kann eine einfache Entnahme der Energiequelle aus dem ausgezogenen Stauraummodul erfolgen.

Vorteilhaft ist es, dass eine Arbeitsplatte vorgesehen ist, die unter einer Ablagefläche der Ablageeinrichtung herausziehbar ist, und dass das Küchenmodul und gegebenenfalls ein Stauraummodul bei unter der Ablagefläche herausgezogener Arbeitsplatte zumindest im Wesentlichen aus einem Bereich unter der Arbeitsplatte herausziehbar ist. Hierdurch ergeben sich gleichzeitig eine vorteilhafte Nutzung eines um das Stauraummodul verlängerten Küchenmoduls und eine vorteilhafte Nutzung der Arbeitsplatte.

Vorteilhaft ist es, dass zumindest ein elastischer Stauraumkorb, der vorzugsweise zumindest teilweise aus einem Filz gebildet ist, vorgesehen ist und dass der Stauraumkorb aus der Ablageeinrichtung ausziehbar ist. Hierdurch kann eine leichte Ausführung erzielt werden. Die elastische Ausgestaltung kann so realisiert sein, dass der Stauraumkorb flach zusammengefaltet werden kann.

Vorteilhaft ist es, dass zumindest eine Kühlbox vorgesehen ist, die neben der Ablageeinrichtung anordenbar ist. Hierdurch kann ein Platz neben der Ablageeinrichtung für die Kühlbox genutzt werden.

Vorteilhaft ist es, dass die Ablageeinrichtung und das in die Ablageeinrichtung eingeschobene Küchenmodul in einem Heckraum angeordnet sind. Hierdurch kann in vorteilhafter Weise eine Heckküche realisiert werden.

Vorteilhaft ist es, dass das Küchenmodul zumindest im Wesentlichen aus dem Heckraum heraus ins Freie ziehbar ist. Dadurch ergibt sich ein komfortabler Zugriff, so dass insbesondere viel Bewegungsfreiheit beim Kochen besteht. Gerüche können aus dem Innenraum ferngehalten werden. Die Entsorgung des Abwassers kann einfach und direkt erfolgen, so dass kein Abwassertank erforderlich ist.

Vorteilhaft ist es, dass wenigstens zwei Ablageeinrichtungen herstellbar sind, indem eine Ablageeinrichtung eine mit der Ablagefläche verbundene Seitenwand und eine an der Seitenwand montierte Auszugsschiene aufweist und eine Ablageeinrichtung eine mit einer Seitenwand, die mit einer Ablagefläche verbunden ist, verbundene Seitenwandverlängerung und eine an der Seitenwandverlängerung montierte Auszugsschiene aufweist. Hierdurch kann eine Herstellung vereinfacht werden. Insbesondere kann eine kostengünstige und an die Nachfrage angepasste Herstellung ermöglicht werden.

Vorteilhaft ist es, dass Energiequellen und flexible Stromleitungskanäle vorgesehen sind, wobei die modulare Anordnung ohne Stauraummodul mit einem flexiblen Stromleitungskanal ausgestaltet ist, der das Küchenmodul mit einer an der Ablageeinrichtung angeordneten Energiequelle verbindet, und dass die modulare Anordnung mit dem Stauraummodul eine in dem Stauraummodul angeordnete Energiequelle aufweist, die mit dem Küchenmodul verbunden wird. Hierdurch kann eine kostengünstige und an die Nachfrage angepasste Herstellung ermöglicht werden.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug mit einer modularen Anordnung entsprechend einem ersten Ausführungsbeispiel in einer schematischen, auszugsweisen, räumlichen Darstellung, wobei eine Ansicht von hinten bei geöffneter Heckklappe dargestellt ist, in der ein Küchenmodul eingeschoben ist;
- Fig. 2: eine auszugsweise, räumliche Darstellung des in Fig. 1 gezeigten Freizeitfahrzeugs des ersten Ausführungsbeispiels, wobei das Küchenmodul ausgezogen ist und wobei eine bevorzugte Anordnung der Energiequelle für das erste Ausführungsbeispiel der modularen Anordnung gezeigt ist;
- Fig. 3: das in Fig. 1 gezeigte Freizeitfahrzeug des ersten Ausführungsbeispiels in einer schematischen, auszugsweisen, räumlichen Darstellung, wobei das Küchenmodul ausgezogen ist und wobei eine Spüle in einem zusammengefalteten Zustand gezeigt ist;
- Fig. 4A: die in Fig. 3 gezeigte Spüle für die modulare Anordnung in einer räumlichen Darstellung, wobei die Spüle im aufgefalteten Zustand gezeigt ist, in der diese ein großes Aufnahmevolumen hat;
- Fig. 4B: die in Fig. 4A gezeigte Spüle in einer räumlichen Darstellung im zusammengefalteten Zustand;
- Fig. 4C: die in Fig. 4A gezeigte Spüle in einer räumlichen Darstellung im aufgefalteten Zustand, wobei ein Verschluss für einen Abfluss der Spüle gezeigt ist;
- Fig. 5: das in Fig. 3 gezeigte Freizeitfahrzeug des ersten Ausführungsbeispiels in einer auszugsweisen, räumlichen Darstellung, wobei ein Schneidbrett anstelle der Spüle vorgesehen ist;
- Fig. 6: das in Fig. 3 gezeigte Freizeitfahrzeug des ersten Ausführungsbeispiels in einer auszugsweisen, räumlichen Darstellung, wobei eine Seitentür gezeigt ist;
- Fig. 7A: einen Magnetverschluss für die in Fig. 6 gezeigte Modulküche, der für eine Seitentür des Küchenmoduls dient, wobei der Magnetverschluss im geschlossenen Zustand gezeigt ist;
- Fig. 7B: den Magnetverschluss für das in Fig. 6 gezeigte Küchenmodul, wobei der Magnetverschluss im geöffneten Zustand gezeigt ist;
- Fig. 8: das in Fig. 3 gezeigte Freizeitfahrzeug des ersten Ausführungsbeispiels in einer auszugsweisen, räumlichen Darstellung, wobei die Seitentür geöffnet ist;
- Fig. 9: das in Fig. 3 gezeigte Freizeitfahrzeug des ersten Ausführungsbeispiels in einer auszugsweisen, räumlichen Darstellung, wobei eine Ansicht auf eine Rückseite des Küchenmoduls gezeigt ist;
- Fig. 10: eine ausschnittsweise Detaildarstellung für das in Fig. 9 gezeigte Freizeitfahrzeug in einer schematischen, teilweise geschnittenen Darstellung, wobei ein Zulauf und ein Ablauf von Wasser in und aus dem Küchenmodul veranschaulicht sind;
- Fig. 11: das in Fig. 3 gezeigte Freizeitfahrzeug des ersten Ausführungsbeispiels in einer auszugsweisen, räumlichen Darstellung, wobei eine abgewandelte Ausgestaltung gezeigt ist, bei der die modulare Anordnung um eine Arbeitsplatte erweitert ist;
- Fig. 12: das in Fig. 11 gezeigte Freizeitfahrzeug des ersten Ausführungsbeispiels in einer auszugsweisen, räumlichen Darstellung in der abgewandelten Ausgestaltung, bei der die modulare Anordnung um eine Arbeitsplatte erweitert ist, wobei die Arbeitsplatte ausgezogen ist und wobei das Küchenmodul zusätzlich unter der Arbeitsplatte herausgezogen ist;
- Fig. 13: das in Fig. 11 gezeigte Freizeitfahrzeug des ersten Ausführungsbeispiels in einer auszugsweisen, räumlichen Darstellung in der abgewandelten Ausgestaltung, bei der die modulare Anordnung um eine Arbeitsplatte erweitert ist, wobei zusätzlich Stauraumkörbe und eine Kühlbox vorgesehen sind;
- Fig. 14: ein Freizeitfahrzeug mit einer modularen Anordnung entsprechend einem zweiten Ausführungsbeispiel in einer schematischen, auszugsweisen, räumlichen Darstellung, wobei eine Ansicht von hinten bei geöffneter Heckklappe dargestellt ist, in der ein Küchenmodul eingeschoben ist, und wobei eine Ablagefläche einer Ablageeinrichtung hochgeklappt ist, um eine Benutzung des Küchenmoduls im eingeschobenen Zustand zu ermöglichen;
- Fig. 15: das in Fig. 14 gezeigte Freizeitfahrzeug in einer schematischen, auszugsweisen, räumlichen Darstellung, wobei das Küchenmodul aus der Ablageeinrichtung herausgezogen ist, um eine Benutzung des Küchenmoduls im ausgezogenen Zustand zu ermöglichen;
- Fig. 16: ein Freizeitfahrzeug mit einer modularen Anordnung entsprechend einem dritten Ausführungsbeispiel in einer schematischen, auszugsweisen, räumlichen Darstellung, wobei eine Ansicht von hinten bei geöffneter Heckklappe dargestellt ist, in der ein Küchenmodul eingeschoben ist;
- Fig. 17: das in Fig. 16 gezeigte Freizeitfahrzeug entsprechend dem dritten Ausführungsbeispiel in einer schematischen, auszugsweisen, räumlichen Darstellung, wobei eine ausgezogene Arbeitsplatte gezeigt ist und wobei das Küchenmodul zusätzlich auch unter der Arbeitsplatte herausgezogen ist, um eine vorteilhafte Nutzung der modularen Anordnung zu ermöglichen; und
- Fig. 18: ein Schaubild zur Veranschaulichung eines modularen Baukastensystems zur Herstellung unterschiedlicher modularer Anordnungen, wobei beispielsweise eine Ausgestaltung einer modulare Anordnung entsprechend dem ersten Ausführungsbeispiel, wie auf der linken Seite gezeigt, und eine modulare Anordnung entsprechend dem dritten Ausführungsbeispiel, wie auf der rechten Seite gezeigt, mit einer großen Anzahl von Gleichteilen und nur einem geringen Anteil an unterschiedlichen beziehungsweise zusätzlichen Teilen hergestellt werden können.

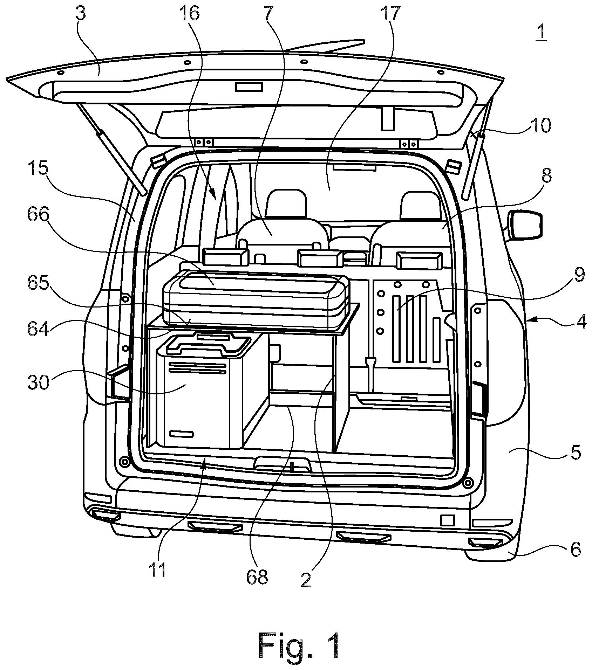

Fig. 1 zeigt ein Freizeitfahrzeug 1 mit einer Ablageeinrichtung 2 entsprechend einem Ausführungsbeispiel in einer schematischen, räumlichen Darstellung, wobei eine Ansicht von hinten bei geöffneter Heckklappe 3 dargestellt ist. Das Freizeitfahrzeug 1 kann auf einem Basisfahrzeug 4 basieren. Als Basisfahrzeug 4 dient in diesem Ausführungsbeispiel ein Hochdachkombi. Dadurch kann das Freizeitfahrzeug 1 mit reduziertem Herstellungsaufwand hergestellt werden. Um die Herstellungskosten zu optimieren, werden hierbei insbesondere die Karosserie 5, das Fahrwerk 6, die Sitze 7, 8 der ersten Reihe und die Rückbank 9 übernommen. Die Heckklappe 3 ist vorzugsweise die Heckklappe 3 des Basisfahrzeugs 4.

Das Freizeitfahrzeug 1 weist eine modulare Anordnung 11 auf, die die Ablageeinrichtung 1 umfasst. In diesem Ausführungsbeispiel ist die modulare Anordnung im Heck 15 des Freizeitfahrzeugs 1 angeordnet. Hierbei ist im Heck 15 ein Heckraum 16 als Teil eines Innenraums 17 des Freizeitfahrzeugs 1 hinter der Rückbank 9 realisiert. Der Heckraum 16 kann bei einer abgewandelten Ausgestaltung aber auch von dem vorne vorgesehen Innenraum 17 getrennt sein.

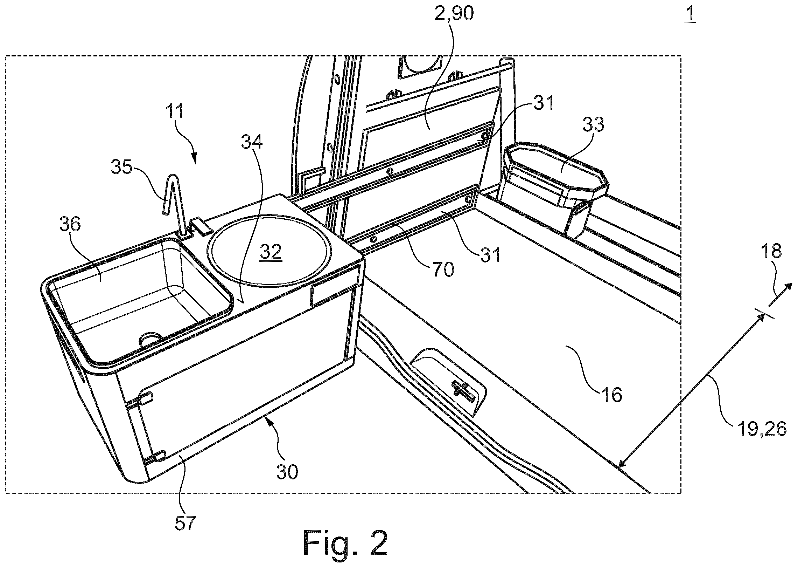

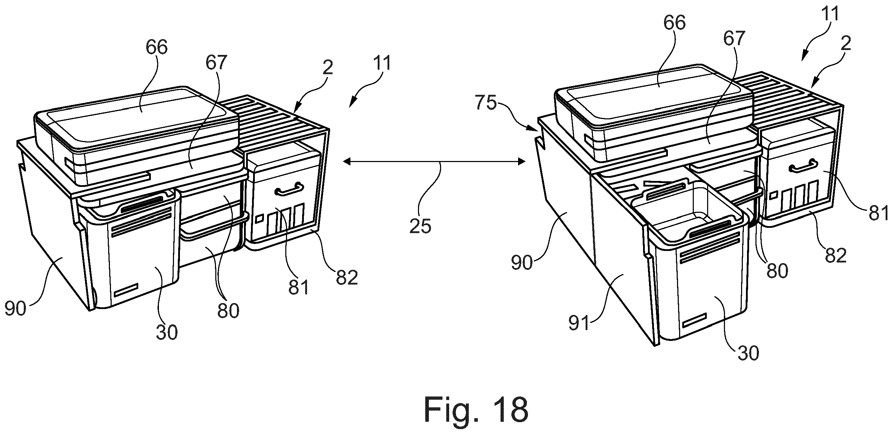

Eine in einer Längsrichtung (Fahrzeuglängsrichtung) 18 (Fig. 2) des Freizeitfahrzeugs 1 betrachtete Länge 19 des Heckraums 16, der für die modulare Anordnung 11 zur Verfügung steht, kann hierbei von dem Typ oder Modell des Freizeitfahrzeugs 1 abhängen. Insbesondere können eine Normalversion und eine Langversion eines speziellen Modells eines Basisfahrzeugs 4, insbesondere eines Hochdachkombis, von einem Fahrzeughersteller produziert werden. Das modulare Baukastensystem 25 (Fig. 18) ermöglicht die Ausgestaltung von Varianten der modularen Anordnung 11, die sich insbesondere hinsichtlich ihrer Länge 26 (Fig. 2) unterscheiden können, wobei die Länge 26 vorzugsweise zumindest näherungsweise gleich der Länge 19 des Heckraums 16 ist. Dies ist anhand der Fig. 18 und auch in Bezug auf das erste und das dritte Ausführungsbeispiel exemplarisch näher erläutert.

Es sind auch geeignete Modifikationen des Basisfahrzeugs 4 möglich. Beispielsweise kann an dem Dach 10 ein geeigneter Dachausschnitt (nicht dargestellt) vorgesehen sein, um beispielsweise den Aufstieg in ein Dachzelt zu ermöglichen.

Die modulare Anordnung 11 weist die Ablageeinrichtung 2 und ein Küchenmodul 30 auf. Bei dem in Fig. 1 dargestellten Freizeitfahrzeug 1 ist das Küchenmodul 30 eingeschoben.

Die Ausgestaltung des Freizeitfahrzeugs 1 und der modularen Anordnung 11 des ersten Ausführungsbeispiels ist im folgenden auch unter Bezugnahme auf Fig. 2 bis 13 weiter beschrieben.

Fig. 2 zeigt eine auszugsweise, räumliche Darstellung des in Fig. 1 gezeigten Freizeitfahrzeugs 1 des ersten Ausführungsbeispiels, wobei das Küchenmodul 30 ausgezogen ist.

Das Küchenmodul 30 ist mittels Auszugsschienen 31 mit der Ablageeinrichtung 2 verbunden. Hierbei kann, wie es in Fig. 2 veranschaulicht ist, das Küchenmodul 30 aus der Ablageeinrichtung 2 vollständig herausgezogen werden. Insbesondere kann das Küchenmodul 30 dabei auch aus dem Heckraum 16 ins Freie gezogen werden.

Das Küchenmodul 30 weist einen Induktionskocher 32 auf. Ferner ist eine Energiequelle 33 vorgesehen, die insbesondere zum Betrieb des Induktionskochers 32 dient. Bei dem ersten Ausführungsbeispiel der modularen Anordnung 2 ist die Energiequelle 33 bezüglich der Ablageeinrichtung 2 ortsfest angeordnet. Hierbei kann aber eine Entnahme der Energiequelle 33 zum Aufladen möglich sein.

Die Energiequelle 33 ermöglicht eine maximale Flexibilität. Ferner kann eine Autarkie ermöglicht werden.

Das Küchenmodul 30 weist eine Oberseite 34 auf. Der Induktionskocher 32 nimmt einen Teil der Oberseite 34 ein. Ferner ist an der Oberseite 34 ein Wasserhahn 35 montiert. Ferner ist von der Oberseite 34 her eine Spüle 36 zugänglich.

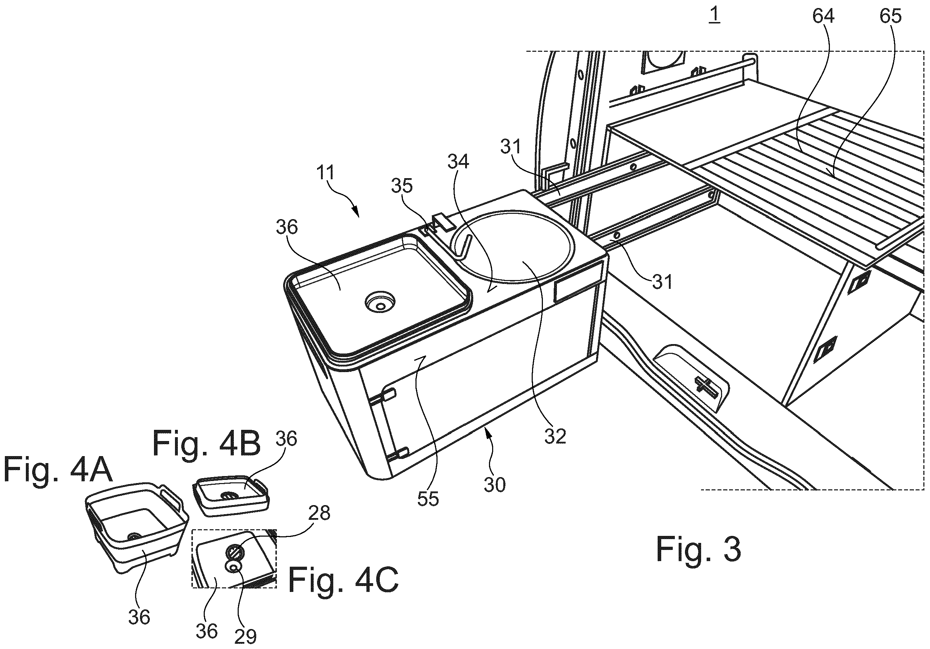

Fig. 3 zeigt das in Fig. 1 gezeigte Freizeitfahrzeug 1 des ersten Ausführungsbeispiels in einer schematischen, auszugsweisen, räumlichen Darstellung, wobei das Küchenmodul 30 ausgezogen ist. Ferner ist die Spüle 36 in einem zusammengefalteten Zustand gezeigt.

Die faltbare Spüle 36 kann eine flexible Stauraumnutzung im Grundkörper (Küchenblock) 57 des Küchenmoduls 30 ermöglichen.

Der Wasserhahn 35, der in Fig. 2 aufgerichtet gezeigt ist, ist so umklappbar, dass er dann zumindest näherungsweise parallel zu der Oberseite 34 des Küchenmoduls 30 orientiert ist, wie es in Fig. 3 gezeigt ist. Im umgeklappten Zustand des Wasserhahns 35 kann das Küchenmodul 30 eingeschoben werden.

Fig. 4A zeigt die in Fig. 3 gezeigte Spüle 36 für die modulare Anordnung 11 in einer räumlichen Darstellung, wobei die Spüle 36 im aufgefalteten Zustand gezeigt ist, in der diese ein großes Aufnahmevolumen hat. Fig. 4B zeigt die in Fig. 4A gezeigte Spüle 36 in einer räumlichen Darstellung im zusammengefalteten Zustand. Fig. 4C zeigt die in Fig. 4A gezeigte Spüle 36 in einer räumlichen Darstellung im aufgefalteten Zustand, wobei ein Verschluss 28 für einen Abfluss 29 der Spüle 36 gezeigt ist.

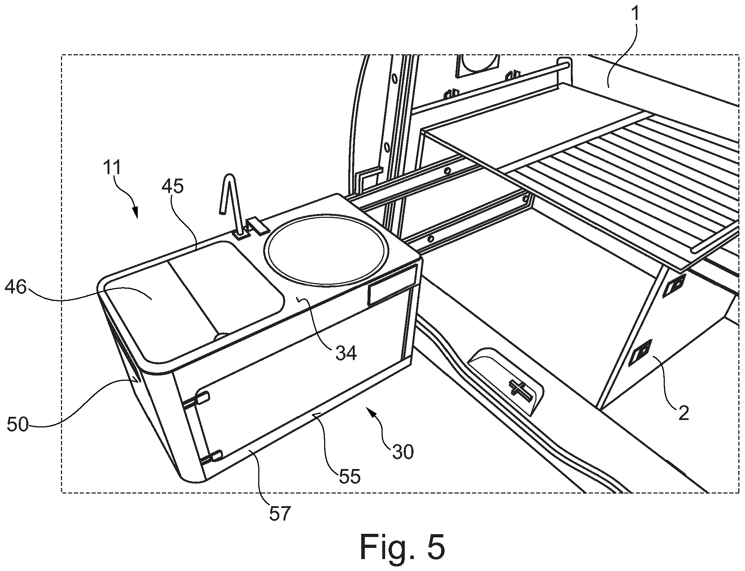

Fig. 5 zeigt das in Fig. 3 gezeigte Freizeitfahrzeug 1 des ersten Ausführungsbeispiels in einer auszugsweisen, räumlichen Darstellung, wobei ein Schneidbrett 46 anstelle der Spüle 36 vorgesehen ist. Das Küchenmodul 30 weist an seiner Oberseite 34 eine Öffnung 45 auf. Wie in Fig. 2 gezeigt ist, kann die Spüle 36 in die Öffnung 45 eingesetzt werden. Die Spüle 36 kann entnommen und zusammengefaltet werden. Dann kann die Spüle auch flach genutzt werden, wie es in Fig. 3 gezeigt ist. Wie in Fig. 5 gezeigt ist, kann anstelle der Spüle 36 das Schneidbrett 46 in die Öffnung 45 eingesetzt werden.

Das Schneidbrett 46 kann als 2-teiliges Schneidbrett 46 ausgebildet sein. Das Schneidbrett 46 kann aus Bambus gebildet sein. Das Schneidbrett 46 kann im Grundkörper (Küchenblock) 57 verstaut werden.

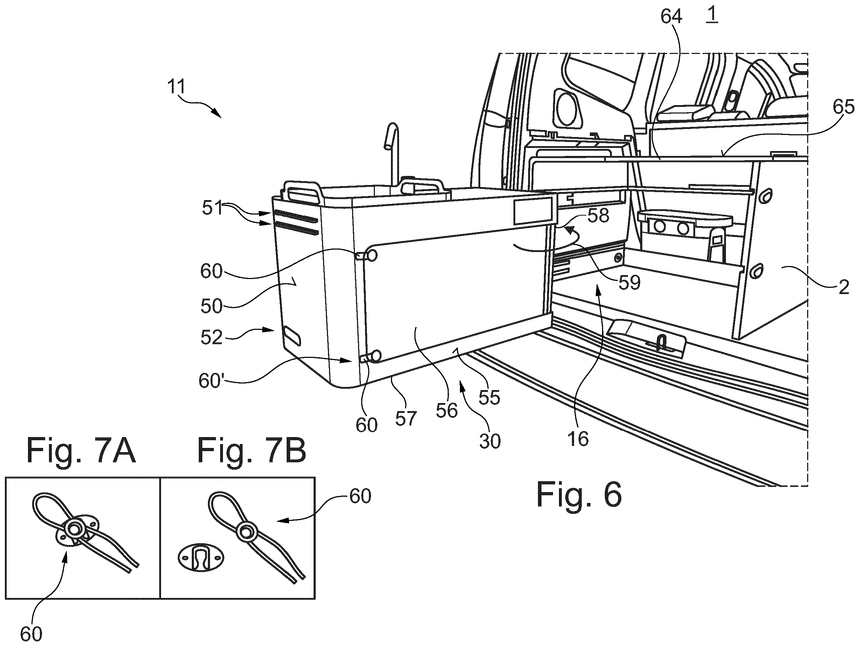

Fig. 6 zeigt das in Fig. 3 gezeigte Freizeitfahrzeug 1 des ersten Ausführungsbeispiels in einer auszugsweisen, räumlichen Darstellung, wobei eine Seitentür 56 des Küchenmoduls 30 gezeigt ist. Ferner zeigt Fig. 7A einen Magnetverschluss 60 für das in Fig. 6 gezeigte Küchenmodul 30. Solche Magnetverschlüsse 60 sind an der Seitentür 56 des Küchenmoduls 30 beziehungsweise an einem Grundkörper 57 des Küchenmoduls 30 vorgesehen. Dabei zeigen Fig 6 und Fig. 7A die Magnetverschlüsse 60 beziehungsweise den Magnetverschluss 60 im geschlossenen Zustand.

Fig. 7B zeigt den Magnetverschluss 60 für das in Fig. 6 gezeigte Küchenmodul im geöffneten Zustand. Die Seitentür 56 kann mittels solcher Magnetverschlüsse 60 leicht wieder geschlossen werden, da auch große Toleranzen ausgeglichen werden können.

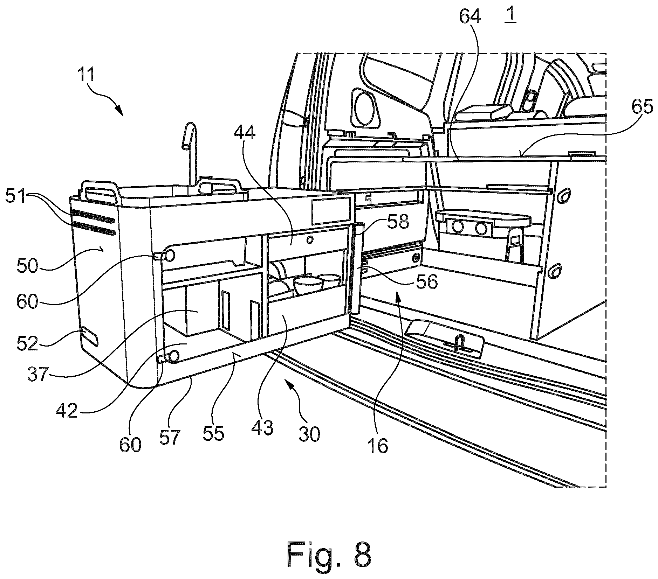

Fig. 8 zeigt das in Fig. 3 gezeigte Freizeitfahrzeug 1 des ersten Ausführungsbeispiels in einer auszugsweisen, räumlichen Darstellung, wobei die Seitentür 56 geöffnet ist. Die elastische Seitentür 56 des Küchenmoduls 30, die an der Seitenwand 55 vorgesehen ist, ist als Filztür 56 ausgebildet.

Die elastische Seitentür 56 ist an der von der Seitenwand 50 beziehungsweise dem Griff 52 abgewandten Kante 58 angeschlagen. Dadurch kann die Seitentür 56 in den Heckraum 16 hinein gebogen werden, wenn die Seitentür 56 geöffnet wird, wie es in Fig. 6 durch einen Pfeil 59 veranschaulicht ist.

Der in Fig. 8 gezeigt Frischwassertank 37 kann beispielsweise etwa 10 Liter, insbesondere 12 Liter, fassen. Ferner verbleibt ein großer Stauraum 42 im Küchenmodul 30. Ferner kann ein abnehmbares Aufräumsystem 43 vorgesehen sein, das unter einer Schublade 44, insbesondere einem Besteckfach 44, angeordnet sein. kann.

Wie in den Fig. 6 und 8 gezeigt ist, weist das Küchenmodul 30 an seiner Seitenwand 50 elastische Bänder 51 auf. Die elastischen Bänder 51 können als Gummibänder 51 ausgebildet sein. die elastischen Bänder 51 können zum Aufhängen von Sachen, insbesondere Kochutensilien, dienen. Ferner weist das Küchenmodul 30 an der Seitenwand 50 einen Griff 52 auf, der als Griffmulde 52 ausgebildet ist. An dem Griff kann ein Nutzer das Küchenmodul 30 aus der Ablageeinrichtung 2 ziehen.

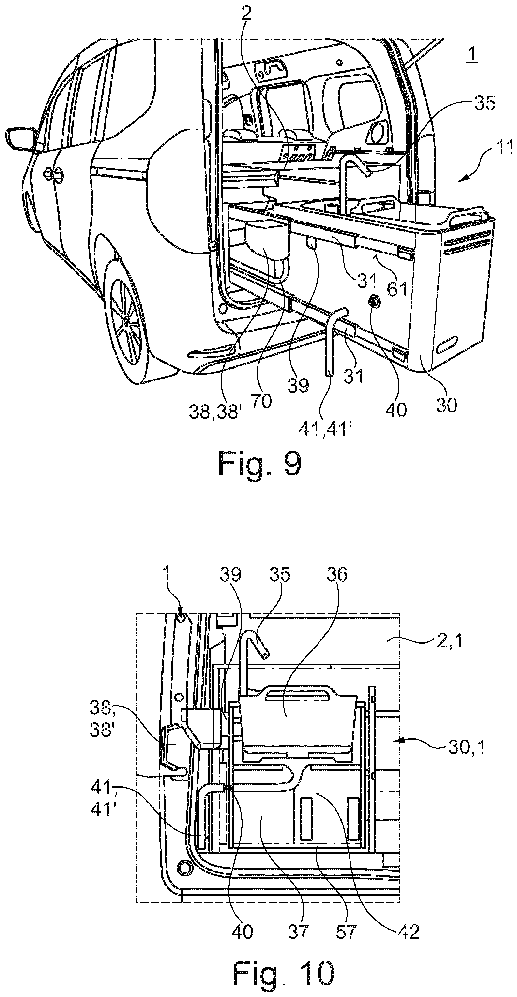

Fig. 9 zeigt das in Fig. 3 gezeigte Freizeitfahrzeug 1 des ersten Ausführungsbeispiels in einer auszugsweisen, räumlichen Darstellung, wobei eine Ansicht auf eine Rückseite 61 des Küchenmoduls gezeigt ist. Ferner zeigt Fig. 10 eine ausschnittsweise Detaildarstellung für das in Fig. 9 gezeigte Freizeitfahrzeug 1 in einer schematischen, teilweise geschnittenen Darstellung, wobei ein Zulauf und ein Ablauf von Wasser in und aus dem Küchenmodul 30 veranschaulicht sind.

Das Küchenmodul 30 weist auch einen Frischwassertank 37 auf. Ferner ist ein abnehmbarer Auffüllbecher 38 vorgesehen, der bei ausgezogenem Küchenmodul 30 an einem Zulauf 39 für den Frischwassertank 37 montierbar ist. Über den Wasserhahn 35 kann dann Frischwasser aus dem Frischwassertank 37 gefördert werden, was über eine Elektropumpe erfolgen kann.

Der Auffüllbecher 38 realisiert in diesem Ausführungsbeispiel ein Auffüllsystem 38' für das Frischwasser.

Außerdem weist das Küchenmodul 30 einen Abwasserauslass 40 auf, an den bei ausgezogenem Küchenmodul 30 ein abnehmbarer Abwasserschlauch 41 montierbar ist. Das Abwasser aus der Spüle 36 ist in diesem Ausführungsbeispiel direkt zu dem Abwasserauslass 40 geführt. Bei einer abgewandelten Ausgestaltung kann aber auch ein Abwassertank vorgesehen sein. Dann kann beispielsweise über ein Elektropumpe oder durch die Schwerkraft eine Entleerung über den Abwasserschlauch 41 erfolgen.

Der Abwasserschlauch 41 stellt ein Ausführungsbeispiel für eine Abwassermöglichkeit 41' dar.

Die Ablageeinrichtung 2 weist eine Ablageplatte 64 mit einer obenliegenden Ablagefläche 65 auf. Auf der Ablagefläche 65 können ein oder mehrere Gegenstände 66 (Fig. 1) abgelegt werden. Das Küchenmodul 30 kann hierbei im ausgezogenen Zustand auch dann genutzt werden, wenn die Ablagefläche 65 mit solchen Gegenständen belegt ist.

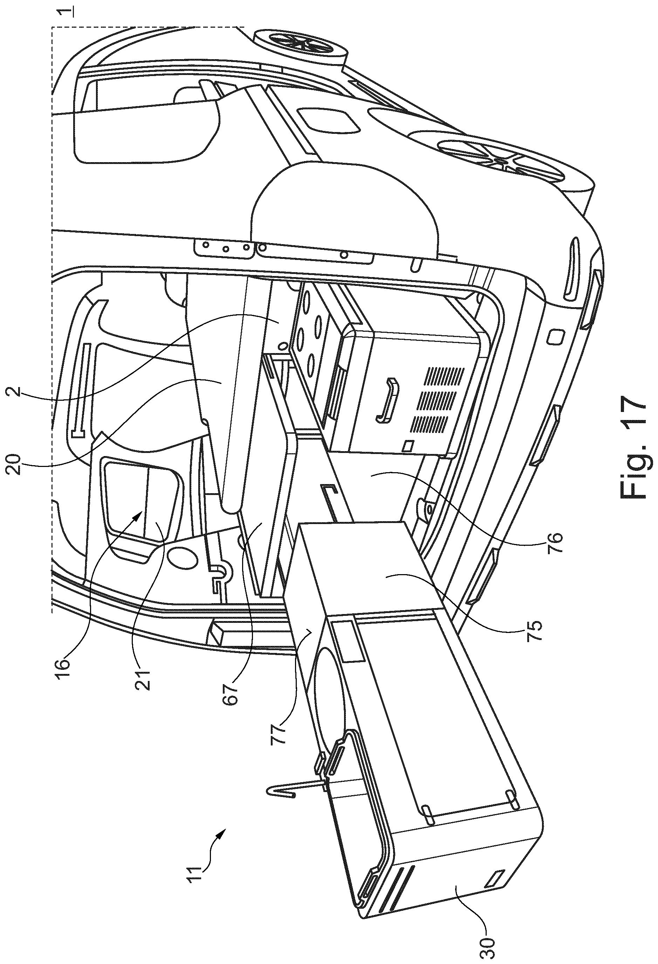

Der Gegenstand 33 kann ein Bettpaket sein, das eine Komfortluftmatratze mit einem Memoryschaum und eine Dropstichmatte umfasst. Dann kann durch einen Umbau zusätzlich ein Bett 20 (Fig. 17) realisiert werden, bei der die Ablagefläche 65 der Ablageeinrichtung 2 als Auflage für die Dropstichmatte dient.

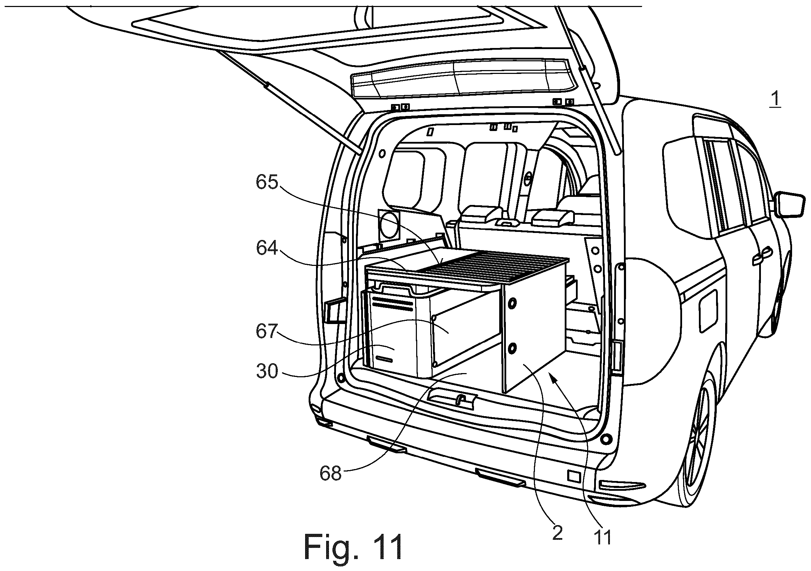

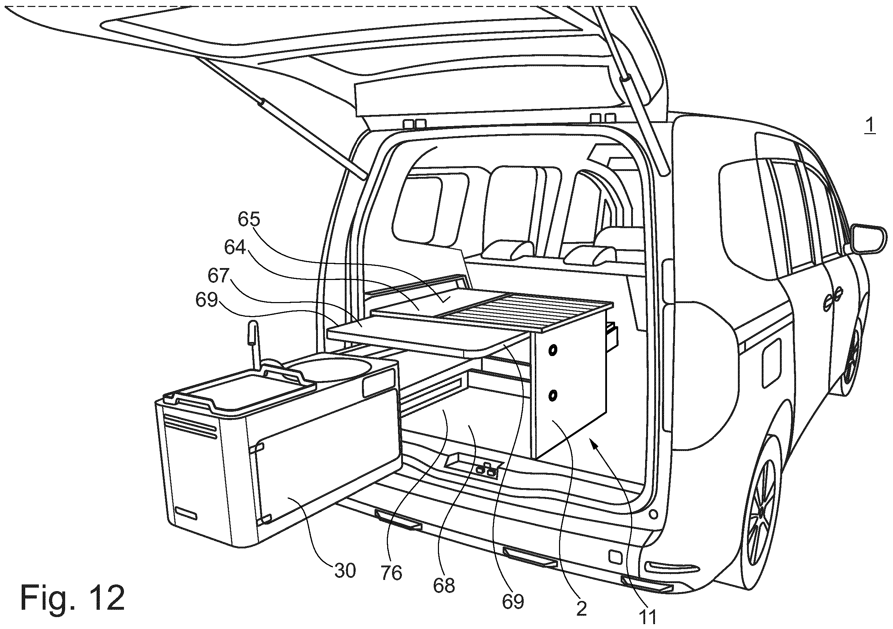

Fig. 11 zeigt das in Fig. 3 gezeigte Freizeitfahrzeug 1 des ersten Ausführungsbeispiels in einer auszugsweisen, räumlichen Darstellung, wobei eine abgewandelte Ausgestaltung gezeigt ist, bei der die modulare Anordnung 11 um eine Arbeitsplatte 67 erweitert ist. Ferner zeigt Fig. 12 das in Fig. 11 gezeigte Freizeitfahrzeug 1 des ersten Ausführungsbeispiels in einer auszugsweisen, räumlichen Darstellung in der abgewandelten Ausgestaltung, bei der die modulare Anordnung 11 um eine Arbeitsplatte 67 erweitert ist, wobei die Arbeitsplatte 67 ausgezogen ist und wobei das Küchenmodul 30 zusätzlich unter der Arbeitsplatte 67 herausgezogen ist.

Die Arbeitsplatte 67 ist unter der der Ablagefläche 65 beziehungsweise unter der Ablageplatte 64 angeordnet, wenn die Arbeitsplatte 67 eingeschoben ist. Die Arbeitsplatte 67 ist außerdem ausziehbar, wobei sie zumindest teilweise aus der Ablageeinrichtung 2 gezogen werden kann. Vorzugsweise ist die Arbeitsplatte 67 vollständig ausziehbar und zudem abnehmbar.

Die Arbeitsplatte 67 kann an Profilen 69 aufgehängt sein. Die Profile sind mit der Ablageeinrichtung 2 verbunden. Hierbei können im Rahmen des modularen Baukastensystems 25 Profile 69 vorgesehen sein, aus denen die Arbeitsplatte 67 entnehmbar ist oder nicht.

Die Arbeitsplatte 67 kann somit eine ausziehbare Arbeitsfläche ermöglichen. Dadurch ist im Rahmen des modularen Baukastensystems 25 eine Küchenerweiterungsfunktion gegeben. Neben dem Küchenmodul 30 kann in der Ablageeinrichtung 2 noch ein freier Stauraum 68 verbleiben.

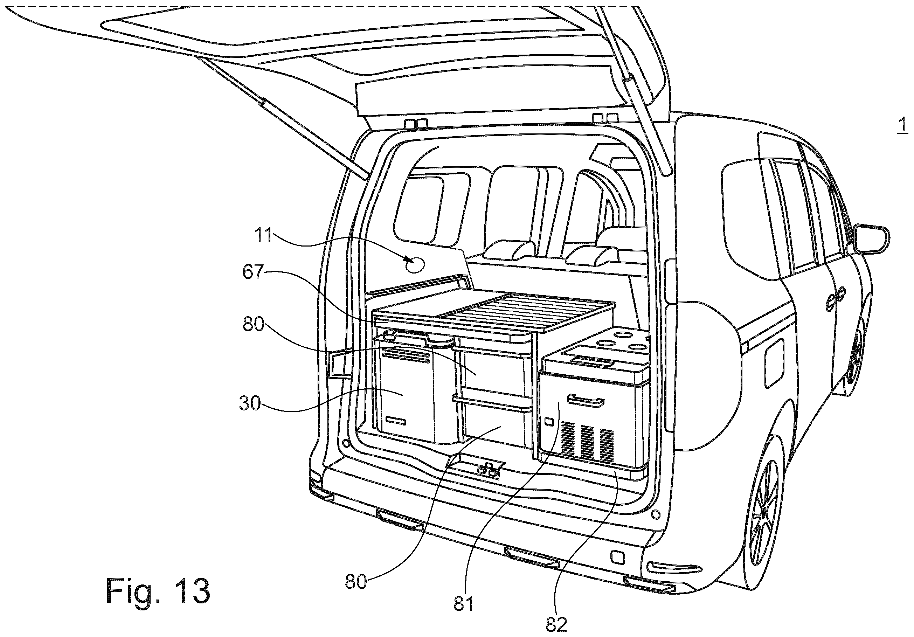

Fig. 13 zeigt das in Fig. 11 gezeigte Freizeitfahrzeug 1 des ersten Ausführungsbeispiels in einer auszugsweisen, räumlichen Darstellung in der abgewandelten Ausgestaltung, bei der die modulare Anordnung 11 um die Arbeitsplatte 67 erweitert ist und bei der zusätzlich Stauraumkörbe 80 und eine Kühlbox 81 vorgesehen sind.

Die Kühlbox 81 kann beispielsweise etwa 30 Liter fassen und beispielsweise etwa 13 kg schwer sein. Ferner kann die Kühlbox 81 gegebenenfalls von der Energiequelle 33 oder einer weiteren solchen Energiequelle 33 gespeist sein. Die Kühlbox 81 kann auf einem ausziehbaren Boden 82 montiert sein.

Zumindest ein elastischer Stauraumkorb 80 ist vorzugsweise zumindest teilweise aus einem Filz gebildet. Die Stauraumkörbe 80 sind aus der Ablageeinrichtung 2 ausziehbar. Ferner ist die Kühlbox 81 neben der Ablageeinrichtung 2 angeordnet.

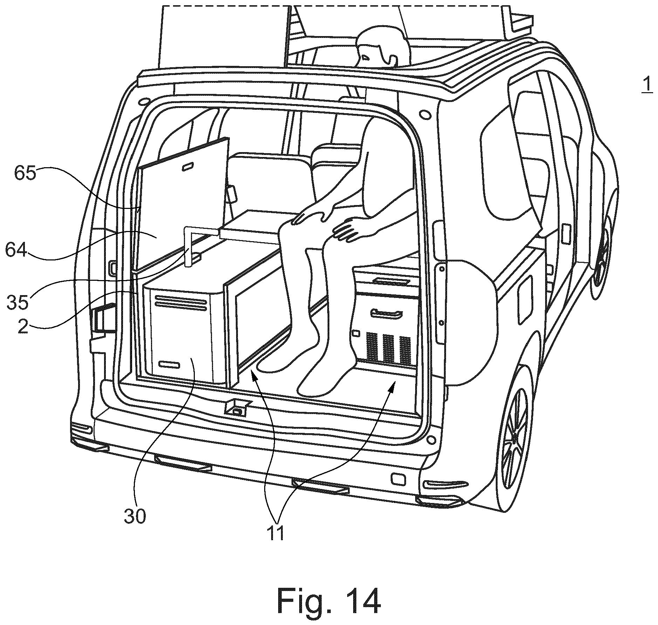

Fig. 14 zeigt ein Freizeitfahrzeug 1 mit einer modularen Anordnung 11 entsprechend einem zweiten Ausführungsbeispiel in einer schematischen, auszugsweisen, räumlichen Darstellung, wobei eine Ansicht von hinten bei geöffneter Heckklappe 3 dargestellt ist. Das Küchenmodul 30 ist im eingeschoben Zustand dargestellt. Ferner ist die Ablageeinrichtung 2 entsprechend dem zweiten Ausführungsbeispiel ausgebildet. Die Ablageplatte 64 mit der Ablagefläche 65 der Ablageeinrichtung kann von dem Nutzer hochgeklappt werden. Ferner kann dann der Wasserhahn 35 hochgeklappt werden. Dann ist eine Benutzung des Küchenmoduls 30 im eingeschobenen Zustand möglich.

Somit weist die Ablageeinrichtung 2 im zweiten Ausführungsbeispiel eine Ablagefläche 65 auf, wobei die Ablagefläche 65 so hochklappbar ist, dass eine Benutzung des Küchenmoduls 30 auch dann möglich ist, wenn das Küchenmodul 30 in die Ablageeinrichtung 2 eingeschoben ist.

Speziell kann eine Küchennutzung im geschlossenen Freizeitfahrzeug 1 ermöglicht werden.

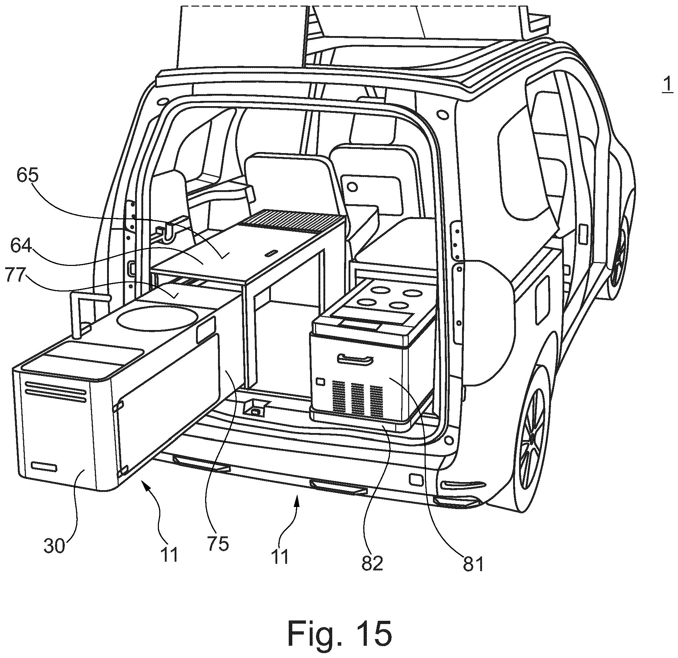

Fig. 15 zeigt das in Fig. 14 gezeigte Freizeitfahrzeug 1 in einer schematischen, auszugsweisen, räumlichen Darstellung, wobei das Küchenmodul 30 aus der Ablageeinrichtung 2 herausgezogen ist, um eine Benutzung des Küchenmoduls 30 im ausgezogenen Zustand zu ermöglichen. Hierbei kann die Ablageplatte 64 mit der Ablagefläche 65 heruntergeklappt sein. Dadurch können beispielsweise Gegenstände 66 (Fig. 1) auf der Ablageplatte 64 liegen bleiben und gleichzeitig kann das Küchenmodul 30 genutzt werden.

Hierbei ist eine Küchennutzung bei offenem Freizeitfahrzeug 1 möglich. Die Kühlbox 81 ist in Fig. 15 im teilweise ausgezogenen Zustand gezeigt, was durch den ausziehbaren Boden 82 ermöglicht wird.

Bei dem ersten und dem zweiten Ausführungsbeispiel kann die Energiequelle 33, insbesondere eine aufladbare Batterie 33, vorgesehen sein, die im montierten Zustand ortsfest an und/oder in der Ablageeinrichtung 2 angeordnet ist. Dann ist ein flexibler Stromkanal 70 vorgesehen, der das Küchenmodul 30 mit der Energiequelle 33 verbindet, wie es in Fig. 9 gezeigt ist.

Anhand des zweiten Ausführungsbeispiels ist allerdings eine abgewandelte Ausgestaltung veranschaulicht, bei der ein Stauraummodul 75 vorgesehen, das neben dem Küchenmodul 30 angeordnet ist, und das eine Ausgestaltung ermöglicht, bei der die Energiequelle 33 in dem Stauraummodul 75 angeordnet ist, so dass der flexible Stromkanal 70 entfallen kann. Somit ist es möglich, aber nicht zwingend der Fall, dass die Energiequelle 33 in dem Stauraummodul 75 angeordnet ist.

Das Küchenmodul 30 und das Stauraummodul 75 sind bei einer bevorzugten Ausgestaltung zusätzlich zusammen zumindest im Wesentlichen aus der Ablageeinrichtung 2 herausziehbar. Dann steht eine Oberseite 77 des Stauraummoduls als zusätzliche Abstell- und/oder Arbeitsfläche zur Verfügung.

Im folgenden sind eine modulare Anordnung 11 entsprechend einem dritten Ausführungsbeispiel und ein modulares Baukastensystem 25, das sowohl eine Herstellung einer modularen Anordnung 11 entsprechend dem ersten Ausführungsbeispiel als auch eine Herstellung einer modularen Anordnung entsprechend dem dritten Ausführungsbeispiel ermöglicht, weiter beschrieben.

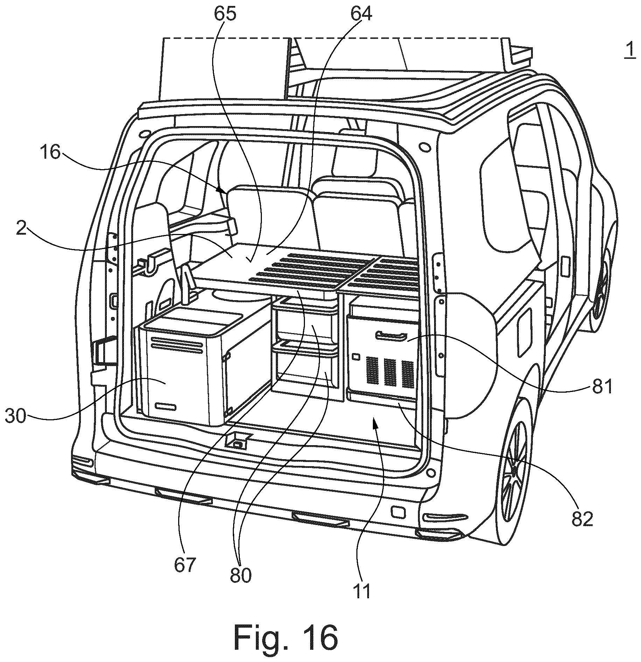

Fig. 16 zeigt ein Freizeitfahrzeug 1 mit einer modularen Anordnung 11 entsprechend einem dritten Ausführungsbeispiel in einer schematischen, auszugsweisen, räumlichen Darstellung, wobei eine Ansicht von hinten bei geöffneter Heckklappe 3 dargestellt ist, wobei das Küchenmodul in die Ablageeinrichtung 2 eingeschoben ist. Ferner zeigt Fig. 17 das in Fig. 16 gezeigte Freizeitfahrzeug 1 entsprechend dem dritten Ausführungsbeispiel in einer schematischen, auszugsweisen, räumlichen Darstellung, wobei eine ausgezogene Arbeitsplatte 67 gezeigt ist und wobei das Küchenmodul 30 zusätzlich auch unter der Arbeitsplatte 67 herausgezogen ist, um eine vorteilhafte Nutzung der modularen Anordnung 11 zu ermöglichen.

Somit kann bei dem modularen Baukastensystem 25 eine Arbeitsplatte 67 montiert werden, die unter einer Ablagefläche 65 der Ablageeinrichtung 2 herausziehbar ist. Dann ist es weiter vorteilhaft, dass das Küchenmodul 30 und das gegebenenfalls vorgesehene Stauraummodul 75 bei unter der Ablagefläche 65 herausgezogener Arbeitsplatte 67 auch zumindest im Wesentlichen aus einem Bereich 76 unter der Arbeitsplatte 67 herausgezogen werden können. Dann können sowohl die Arbeitsplatte 67 als auch die Oberseite 77 des Stauraummoduls 75 als zusätzliche Abstell- und/oder Arbeitsflächen dienen.

Die Ablageeinrichtung 2 und das in die Ablageeinrichtung 2 eingeschobene Küchenmodul 30 sind in einem Heckraum 16 des Freizeitfahrzeugs 1 angeordnet. Das Küchenmodul 30 ist aus dem Heckraum 16 heraus ins Freie ziehbar. Hierbei können beispielsweise modulare Anordnungen 11 mit unterschiedlichen Längen 26 hergestellt werden, um eine Anpassung an unterschiedliche Längen 19 des Heckraums 16 von beispielsweise unterschiedlichen Basisfahrzeugen 4 zu ermöglichen.

Bei dieser Ausgestaltung kann eine Funktionsintegration in das Stauraummodul 75 erfolgen. Dies ermöglicht die Unterbringung der Energiequelle 33. Ferner kann weiterer Stauraum zur Verfügung stehen. Außerdem können zusätzliche Schubladen realisiert werden. Es können auch ein oder mehrere Wassertanks beziehungsweise zumindest ein größerer Wassertank realisiert werden.

Speziell bei einem Basisfahrzeug 4, das eine größere Länge 19 im Heckraum 16 aufweist, kann die Arbeitsplatte 67 gegebenenfalls größer, insbesondere länger, ausgeführt werden und zugleich im vollständig ausgezogenen Zustand noch vollständig im Heckraum 16 angeordnet sein.

Ferner ist in Fig. 17 veranschaulicht, dass ein Bett 20 aufgebaut bleiben kann, wenn das Küchenmodul 30 benutzt wird. Dies ist ist möglich, da für das Bett 20 lediglich die Ablagefläche 65 der Ablageplatte 64 der Ablageeinrichtung 2 benötigt wird, die belegt bleiben kann, wenn das Küchenmodul 30 ausgezogen wird.

Ferner können geräumige Fenstertaschen 21 auf der rechten und linken Fahrzeugseite vorgesehen sein, die beispielsweise zum Verstauen von Bettzeug dienen können.

Fig. 18 zeigt ein Schaubild zur Veranschaulichung des modularen Baukastensystems 25 zur Herstellung unterschiedlicher modularer Anordnungen 11, wobei beispielsweise eine Ausgestaltung einer modulare Anordnung 11 entsprechend dem ersten Ausführungsbeispiel, wie auf der linken Seite gezeigt, und eine modulare Anordnung 11 entsprechend dem dritten Ausführungsbeispiel, wie auf der rechten Seite gezeigt, möglich ist. Hierbei kann eine große Anzahl von Gleichteilen genutzt werden und es ist nur ein geringer Anteil an unterschiedlichen beziehungsweise zusätzlichen Teilen erforderlich. Das modulares Baukastensystem 25 kann speziell zur Herstellung von modularen Anordnungen 11, die für Freizeitfahrzeuge 1, insbesondere Wohnmobile und/oder Campervans und/oder auf Hochdachkombis basierenden Freizeitfahrzeugen, dienen.

Exemplarisch sind zwei unterschiedliche modulare Anordnungen 11 für zwei unterschiedliche Basisfahrzeuge 4, auf denen die Freizeitfahrzeuge 1 basieren, gezeigt. Hierbei sind zwei oder mehr Küchenmodule 30 herstellbar, indem in Bezug auf das jeweilige Basisfahrzeug 4 beziehungsweise die jeweilige Länge 19 des Heckraums 16 entweder ein Küchenmodul 30 mit einem Stauraummodul 75 kombiniert wird oder ein Küchenmodul 30 ohne Stauraummodul 75 zum Einsatz kommt.

Ferner können wenigstens zwei Ablageeinrichtungen 2 hergestellt werden, indem bei einer Ausführung eine Ablageeinrichtung 2 eine mit der Ablagefläche 65 verbundene Seitenwand 90 und eine an der Seitenwand 90 montierte Auszugsschiene 31 aufweist. Für eine andere Ausführung weist die Ablageeinrichtung 2 eine Seitenwandverlängerung 91 auf. Die Seitenwandverlängerung 91 ist mit der Seitenwand 90 verbunden, wobei die Seitenwand 90 auch mit der Ablagefläche 65 verbunden ist. Außerdem wird die Auszugsschiene 31 hierbei an der Seitenwandverlängerung 91 montiert. Hierbei können unterschiedlich ausgestaltete Seitenwände 90 zum Einsatz kommen. Ferner können unterschiedliche Arbeitsplatten 67 zum Einsatz kommen.

Außerdem sind bei dem modularen Baukastensystem 25 für die Herstellung von unterschiedlichen modularen Anordnungen 11 Energiequellen 33 und flexible Stromleitungskanäle 70 vorgesehen. Bei einer Ausführung kann die modulare Anordnung 11 ohne Stauraummodul 75, dafür aber mit einem flexiblen Stromleitungskanal 70 ausgestaltet werden. Der flexible Stromleitungskanal 70 verbindet dann das Küchenmodul 30 mit einer an der Ablageeinrichtung 2 angeordneten Energiequelle 33. Bei einer anderen Ausführung wird die modulare Anordnung 11 mit dem Stauraummodul 75 erweitert. In dem Stauraummodul 75 kann dann die Energiequelle 33 angeordnet werden, so dass eine nicht notwendigerweise flexible elektrische Verbindung der Energiequelle 33 mit dem Küchenmodul 30 möglich ist.

Die Erfindung ist nicht auf die beschriebenen Ausführungsformen beschränkt.

## Patentansprüche

1. Modulare Anordnung (11) für ein Freizeitfahrzeug (1), insbesondere ein Wohnmobil und/oder einen Campervan und/oder ein auf einem Hochdachkombi basierendes Freizeitfahrzeug, mit zumindest einem Küchenmodul (30), **dadurch gekennzeichnet,**
**dass** eine Ablageeinrichtung (2) vorgesehen ist, dass das Küchenmodul (30) mittels zumindest einer Auszugsschiene (31) mit der Ablageeinrichtung (2) verbunden ist und dass das Küchenmodul (30) zumindest im Wesentlichen aus der Ablageeinrichtung (2) herausziehbar ist.

2. Modulare Anordnung nach Anspruch 1,
**dadurch gekennzeichnet,**
**dass** das Küchenmodul (30) einen Induktionskocher (32) aufweist.

3. Modulare Anordnung nach einem der vorhergehenden Ansprüche,
**dadurch gekennzeichnet,**
**dass** das Küchenmodul (30) einen Frischwassertank (37) aufweist, dass ein Auffüllbecher (38) vorgesehen ist, der bei ausgezogenem Küchenmodul (30) an einem Zulauf (39) für den Frischwassertank (37) montierbar ist, und dass ein Wasserhahn (35) vorgesehen ist, über den Frischwasser aus dem Frischwassertank (37) förderbar ist.

4. Modulare Anordnung nach einem der vorhergehenden Ansprüche,
**dadurch gekennzeichnet,**
**dass** ein Wasserhahn (35) vorgesehen ist, der so umklappbar ist, dass er zumindest näherungsweise parallel zu einer Oberseite (34) des Küchenmoduls (30) orientiert ist.

5. Modulare Anordnung nach einem der vorherigen Ansprüche,
**dadurch gekennzeichnet,**
**dass** das Küchenmodul (30) eine Spüle (36) aufweist, dass ein Abwasserauslass (40) vorgesehen ist, an den bei ausgezogenem Küchenmodul (30) ein Abwasserschlauch (41) montierbar ist, und dass Abwasser aus der Spüle (36) zumindest mittelbar zu dem Abwasserauslass (40) führbar ist.

6. Modulare Anordnung nach Anspruch 5,
**dadurch gekennzeichnet,**
**dass** das Küchenmodul (30) an seiner Oberseite (34) eine Öffnung (45) aufweist, in die die Spüle (36) einsetzbar ist, dass die Spüle (36) entnehmbar und/oder zusammenfaltbar ist und dass anstelle der Spüle (36) ein Schneidbrett (46) in die Öffnung (45) einsetzbar ist.

7. Modulare Anordnung nach einem der vorhergehenden Ansprüche,
**dadurch gekennzeichnet,**
**dass** das Küchenmodul (30) an zumindest einer Seitenwand (50) zumindest ein elastisches Band (51) aufweist und/oder dass das Küchenmodul (30) an zumindest einer Seitenwand (50) zumindest einen Griff (52), insbesondere eine Griffmulde (52), aufweist, an der das Küchenmodul (30) aus der Ablageeinrichtung (2) ziehbar ist.

8. Modulare Anordnung nach einem der vorhergehenden Ansprüche,
**dadurch gekennzeichnet,**
**dass** das Küchenmodul (30) an zumindest einer Seitenwand (55) ein elastische Seitentür (56), insbesondere eine Filztür (56), aufweist.

9. Modulare Anordnung nach Anspruch 8,
**dadurch gekennzeichnet,**
**dass** die Seitentür (56) mittels zumindest eines Magnetverschlusses (60) geschlossen gehalten ist.

10. Modulare Anordnung nach einem der vorhergehenden Ansprüche,
**dadurch gekennzeichnet,**
**dass** die Ablageeinrichtung (2) eine Ablagefläche (65) aufweist, dass eine Arbeitsplatte (67) vorgesehen ist, die unter der Ablagefläche (65) anordenbar ist, und dass die Arbeitsplatte (67) ausziehbar und vorzugsweise ausziehbar und abnehmbar ist.

11. Modulare Anordnung nach einem der vorhergehenden Ansprüche,
**dadurch gekennzeichnet,**
**dass** die Ablageeinrichtung (2) eine Ablagefläche (65) aufweist und dass die Ablagefläche (65) hochklappbar ist, so dass eine Benutzung des Küchenmoduls (30) ermöglicht ist, wenn das Küchenmodul (30) in die Ablageeinrichtung (2) eingeschoben ist.

12. Modulare Anordnung nach einem der vorhergehenden Ansprüche,
**dadurch gekennzeichnet,**
**dass** eine Energiequelle (33), insbesondere eine aufladbare Batterie (33), vorgesehen ist, die im montierten Zustand ortsfest an und/oder in der Ablageeinrichtung (2) anordenbar ist, und dass ein flexibler Stromkanal (70) vorgesehen ist, der das Küchenmodul (30) mit der Energiequelle (33) verbindet.

13. Modulare Anordnung nach einem der vorhergehenden Ansprüche,
**dadurch gekennzeichnet,**
**dass** ein Stauraummodul (75) vorgesehen ist, das neben dem Küchenmodul (30) angeordnet ist, und dass das Küchenmodul (30) und das Stauraummodul (75) zusammen zumindest im Wesentlichen aus der Ablageeinrichtung (2) herausziehbar sind.

14. Modulare Anordnung nach Anspruch 13,
**dadurch gekennzeichnet,**
**dass** eine Energiequelle (33), insbesondere eine aufladbare Batterie (33), vorgesehen ist, und dass die Energiequelle (33) in dem Stauraummodul (75) angeordnet ist.

15. Modulare Anordnung nach einem der vorhergehenden Ansprüche,
**dadurch gekennzeichnet,**
**dass** eine Arbeitsplatte (67) vorgesehen ist, die unter einer Ablagefläche (65) der Ablageeinrichtung (2) herausziehbar ist, und dass das Küchenmodul (30) und gegebenenfalls ein Stauraummodul (75) bei unter der Ablagefläche (65) herausgezogener Arbeitsplatte (67) zumindest im Wesentlichen aus einem Bereich (76) unter der Arbeitsplatte (67) herausziehbar ist.

16. Modulare Anordnung nach einem der vorhergehenden Ansprüche,
**dadurch gekennzeichnet,**
a) **dass** zumindest ein elastischer Stauraumkorb (80), der vorzugsweise zumindest teilweise aus einem Filz gebildet ist, vorgesehen ist und dass der Stauraumkorb (80) aus der Ablageeinrichtung (2) ausziehbar ist und/oder
b) **dass** zumindest eine Kühlbox (81) vorgesehen ist, die neben der Ablageeinrichtung (2) anordenbar ist.

17. Freizeitfahrzeug (1), insbesondere Wohnmobil und/oder Campervan und/oder auf einem Hochdachkombi basierenden Freizeitfahrzeug, mit zumindest einer modularen Anordnung (11) nach einem der Ansprüche 1 bis 16.

18. Freizeitfahrzeug nach Anspruch 17,
**dadurch gekennzeichnet,**
**dass** die Ablageeinrichtung (2) und das in die Ablageeinrichtung (2) eingeschobene Küchenmodul (30) in einem Heckraum (16) angeordnet sind.

19. Freizeitfahrzeug nach Anspruch 17 oder 18,
**dadurch gekennzeichnet,**
**dass** das Küchenmodul (30) zumindest im Wesentlichen aus dem Heckraum (16) heraus ins Freie ziehbar ist.

20. Modulares Baukastensystem (25) zur Herstellung von modularen Anordnungen (11), die für Freizeitfahrzeuge (1), insbesondere Wohnmobile und/oder Campervans und/oder auf Hochdachkombis basierenden Freizeitfahrzeugen, dienen, wobei wenigstens zwei unterschiedliche modulare Anordnungen (11) für wenigstens zwei unterschiedliche Basisfahrzeuge (4), auf denen die Freizeitfahrzeuge (1) basieren, herstellbar sind und wobei zumindest zwei Küchenmodule (30) herstellbar sind, indem ein Küchenmodul (30) mit einem Stauraummodul (75) kombiniert wird und ein Küchenmodul (30) ohne Stauraummodul (75) zum Einsatz kommt.

21. Modulares Baukastensystem nach Anspruch 20,
**dadurch gekennzeichnet,**
**dass** wenigstens zwei Ablageeinrichtungen (2) herstellbar sind, indem eine Ablageeinrichtung (2) eine mit der Ablagefläche (65) verbundene Seitenwand (90) und eine an der Seitenwand (90) montierte Auszugsschiene (31) aufweist und eine Ablageeinrichtung (2) eine mit einer Seitenwand (90), die mit einer Ablagefläche (65) verbunden ist, verbundene Seitenwandverlängerung (91) und eine an der Seitenwandverlängerung (91) montierte Auszugsschiene (31) aufweist.

22. Modulares Baukastensystem nach Anspruch 20 oder 21,
**dadurch gekennzeichnet,**
**dass** Energiequellen (33) und flexible Stromleitungskanäle (70) vorgesehen sind, wobei die modulare Anordnung (11) ohne Stauraummodul (75) mit einer flexiblen Stromleitungskanal (70) ausgestaltet ist, der das Küchenmodul (30) mit einer an der Ablageeinrichtung (2) angeordneten Energiequelle (33) verbindet, und dass die modulare Anordnung (11) mit dem Stauraummodul (75) eine in dem Stauraummodul (75) angeordnete Energiequelle (33) aufweist, die mit dem Küchenmodul (30) verbunden wird.
